# EUROPÄISCHE PATENTANMELDUNG

(11) **EP 1 316 382 A1**
(43) Veröffentlichungstag der Anmeldung: **04.06.2003**
(21) Anmeldenummer: 02024858.9
(22) Anmeldetag: 08.11.2002
(51) Int. Cl.: B23K 11/31

(54) **Roboterschweisszange zum Punktschweissen mit einem Kniehebel und einer elektrischen Antriebsvorrichtung**

(30) Priorität: 28.11.2001 DE 10158361
(71) Anmelder: Bayerische Motoren Werke Aktiengesellschaft, 80809 München (DE)
(72) Erfinder: Hoesl, Anton, 93152 Nittendorf (DE)

(57) **Zusammenfassung**

Es ist eine Roboterschweißzange bekannt, die aus zwei Zangenarmaturen mit jeweils einer Schweißelektrode besteht. Die beiden Zangenarmaturen sind relativ zueinander im Sinne einer Abstandsveränderung zwischen den Enden der Schweißelektroden in ihrer Lage mittels einer elektrischen Antriebsvorrichtung veränderlich. Aufgabe der Erfindung ist es, eine Widerstandsschweißmaschine zum Punktschweißen zu schaffen, die hohe Schweißkräfte erzeugen kann.

Kerngedanke der Erfindung ist es, dass die mögliche Schweißkraft durch einen mechanischen Kniehebel deutlich höher als die Kraft der elektrischen Antriebsvorrichtung (**9, 36**) ist. Dazu weist eine Roboterschweißzange zwei Zangenarmaturen (**1, 2**) mit jeweils einer Schweißelektrode (**3, 4**) auf. Die Zangenarmaturen (**1, 2**) verlängern sich über ein gemeinsames Zangengelenk (**5**) hinaus, wobei an den freien Enden jeweils ein Hebel (**6, 7**) gelenkig angreift, dessen beiden anderen Enden über ein Gelenk (**8**) miteinander verbunden sind, an dem die Antriebsvorrichtung (**9**) angreift. Gemäß einem Nebenanspruch ist bei einer stationären Widerstandsschweißmaschine (**30**) zumindest eine Schweißelektrode (**31**) in ihrer Lage mittels einer elektrischen, linearen Antriebsvorrichtung (**36**) veränderlich. Die Schweißelek-trode (**31**) ist über einen Arm (**32, 33**) mit einem Gelenk (**34, 35**), an dem die Antriebsvorrichtung (**36**) angreift, im mittleren Bereich mit der Widerstandsschweißmaschine (**30**) verbunden.

## Beschreibung

Die Erfindung betrifft ein Antriebssystem gemäß des Oberbegriffs des Patentanspruchs 1, eine Roboterschweißzange zum Punktschweißen gemäß des Oberbegriffs des Patentanspruchs 2 und eine stationäre Widerstandsschweißmaschine gemäß des Oberbegriffs des Patentanspruchs 6.

Es gibt Werkzeuge und Maschinen, die präzise geregelte, hohe Antriebskräfte im Endbereich der Bewegung benötigen, wie zum Beispiel große Schweißzangen, Widerstandsschweißmaschinen und Einrichtungen zum mechanischen Fügen, Clinchen bzw. Stanznieten. Bisher sind hierfür im wesentlichen pneumatische bzw. hydraulische Antriebe im Einsatz. Den neuesten technischen Stand stellen servomotorisch angetriebene Spindelsysteme dar, deren mögliche maximale Antriebskraft aber limitiert ist und damit deren Einsatzgebiet begrenzt ist.

Aus der DE 199 48 043 A1 ist eine Roboterschweißzange bekannt, die aus zwei Zangenarmaturen mit jeweils einer Schweißelektrode besteht. Die beiden Zangenarmaturen sind relativ zueinander im Sinne einer Abstandsveränderung zwischen den Enden der Schweißelektroden in ihrer Lage mittels einer Antriebsvorrichtung veränderlich. Die Antriebsvorrichtung kann aus einer drehbaren Gewindespindel bestehen, die in einer Spindelmutter geführt ist, die Teil eines Rotors eines elektrischen Servomotors ist.

Zur Zeit sind Motor-/Spindelsysteme bis ca. 15kN Antriebskraft als Antriebselement von Schweißzangen in der Serienfertigung eingesetzt. Darüber hinaus gibt es Entwicklungen von Systemen mit weit höheren Antriebskräften, über deren Dauerhaltbarkeit in der Serienfertigung noch keine Angaben vorliegen. Beispielsweise im Automobilbau gibt es derzeit Tendenzen, die für die Zukunft noch höhere Antriebskräfte für Schweißzangen erfordern: Zum einen nimmt der Einsatz von hoch- und höchstfesten Werkstoffen nimmt zu, zum anderen werden insbesondere beim Bau selbsttragender Karosserien für geländegängige Fahrzeuge dickere Bleche als bei den üblichen Personenkraftwagen eingesetzt, um die hohen Anforderungen an Festigkeit und Steifigkeit bei großen Abmessungen erreichen zu können. Darüber hinaus hat die Leistungsfähigkeit von Robotern im Karosserierohbau derart zugenommen, dass auch immer größere Schweißzangen eingesetzt werden können.

Die dafür erforderlichen hohen Antriebskräfte für eine Roboterschweißzange können derzeit nur sehr aufwendig generiert werden. Als Alternative zur Herstellung solcher Verschweißungen kommen daher stationäre Widerstandsschweißmaschinen zum Einsatz, die deutlich höhere Schweißkräfte erzeugen können. Die zu fügenden Bauteile müssen dabei von Robotern oder von Hand bzw. mit Handhabungsgeräten in die stationäre Widerstandsschweißmaschine eingelegt werden. Dies ist allerdings vom Handling der Bauteile her sehr aufwendig.

Allen beschriebenen Einsatzgebieten ist gemein, dass die erforderlichen hohen Antriebskräfte in den Maschinen und Einrichtungen nur in den letzten 5 - 10% des Bewegungsbereichs nötig sind, im größten Teil des Bewegungsbereichs reichen vergleichsweise geringe Antriebskräfte.

Aufgabe der Erfindung ist es, ein servomotorisches Antriebssystem mit höheren Antriebskräften als den bisher verfügbaren Antriebskräften für oben genannte Einsatzgebiete zu schaffen.

Diese Aufgabe wird durch die Merkmale der Patentansprüche 1, 2 oder 6 gelöst.

Bei Schweißzangen wird die hohe Antriebskraft nur auf die kurze Bewegung des Antriebselements vom Schließen der Zange bis zum Erreichen der Schweißkraft an der Elektrode benötigt. Zum Bewegen der Elektrodenarme werden vergleichsweise geringe Antriebskräfte benötigt.

Bei Widerstandsschweißmaschinen wird die hohe Kraft ebenfalls nur auf dem sehr kurzen Weg (wegen der hohen Steifigkeit der Maschine) zwischen Aufsetzen der Elektrode und Kraftaufbau und zum Nachsetzen während des Schweißprozesses benötigt.

Bei Clinch- und Stanznietmaschinen wird die hohe Kraft nur auf der kurzen Strecke des Durchsetzfügens benötigt.

Die Leistungsgrenze dieser Motor-/Spindelsysteme ist durch die Belastbarkeit und die Lebensdauer der Spindel begrenzt.

Gemäß Patentanspruch 1 wird durch den Einsatz eines mechanischen Kniehebels im Antriebssystem die Antriebskraft eines Motor-/Spindelsystems in dem entscheidenden Bewegungsbereich vervielfacht (Faktor 4 - 10). Dabei ist es wichtig, dass der Kniehebel nicht komplett gestreckt wird. In dem Antriebsbereich vor dem gestreckten Kniehebel besteht ein eindeutiger mathematischer Zusammenhang zwischen Antriebskraft des Motor-/Spindelsystems und den über den Kniehebel übertragenen Kräften. Sinnvoll ist der Bereich einer Vervier- bis etwa Verfünffachung der Antriebskraft bei einem einfachen Kniehebel, bzw. maximal Verzehnfachung bei einem doppelten Kniehebel.

Damit können die Variablen in den Prozessen beherrscht werden, wie zum Beispiel Elektrodenabbrand, unterschiedliche Blechdicken, Elastizität der Maschinen und Zangen, unterschiedliche Kräfte, etc.

Durch den Einsatz eines Kniehebels ist es möglich, das Einsatzgebiet der servomotorisch angetriebenen Maschinen und Einrichtungen erheblich zu erweitern. Der Einsatz einer servomotorischen Antriebsvorrichtung weist gegenüber einer pneumatischen bzw. hydraulischen Antriebsvorrichtung erhebliche Vorteile auf: Einige der für die Qualität relevanten Prozessparameter können geregelt werden und insbesondere bei großen Schweißzangen ist die Lärmbelastung beim Schweißen und der Einfluss des Prozesses auf die Geometrie der Bauteile geringer.

Gemäß Patentanspruch 2 weist eine Roboterschweißzange als Antriebssystem ein Motor-/Spindelsystem auf, das über einen Kniehebel die Roboterschweißzange antreibt.

Gemäß Patentanspruch 3 weist eine Roboterschweißzange zwei Zangenarmaturen mit jeweils einer Schweißelektrode auf. Die Zangenarmaturen verlängern sich über ein gemeinsames Zangengelenk hinaus, wobei an den freien Enden jeweils ein Hebel gelenkig angreift, dessen beiden anderen Enden über ein Gelenk miteinander verbunden sind, an dem die Antriebsvorrichtung angreift. Dadurch wird aufgrund des Hebelverhältnisses durch eine relativ große Verlagerung des Gelenks mit einer definierten Kraft nur eine kleinere Verlagerung der Schweißarmatur mit einer deutlich höheren Kraft erzeugt.

Vorteilhafterweise erreicht die Schweißzange so eine Schweißkraft von mindestens 20kN. Damit liegt die Schweißkraft deutlich höher, als bei bekannten Roboterschweißzangen. Auch höherfeste und dicke Stahlbleche lassen sich so miteinander gut verschweißen. Durch eine geschickte Wahl der Hebelverhältnisse ist idealerweise sogar eine Schweißkraft von mindestens 30kN realisierbar.

Dennoch kann es in Extremfällen - wie bei erforderlichen Ausladungen über 1000 mm - vorkommen, dass die so erzeugten Schweißkräfte noch immer zu gering sind. Dann muss - wie schon aus dem Stand der Technik bekannt - auf eine stationäre Widerstandsschweißmaschine zurückgegriffen werden. Aber auch bei stationären Widerstandsschweißmaschinen kann auf den Kerngedanken der Erfindung zurückgegriffen werden und die erforderliche Schweißkraft durch mechanische Hebelwirkung erzielt werden.

Gemäß Patentanspruch 6 ist bei einer stationären Widerstandsschweißmaschine zumindest eine Schweißelektrode in ihrer Lage entlang einer mechanisch vorgegebenen Bahn mittels einer elektrischen, linearen Antriebsvorrichtung veränderlich. Die Schweißelektrode ist über einen Arm mit der Maschine verbunden, wobei der Arm im mittleren Bereich ein Gelenk aufweist, an dem die Antriebsvorrichtung angreift, und das den Arm in zwei Hebel unterteilt. Beim Durchstrecken des Arms legt das Gelenk einen relativ langen Weg zurück, während sich der Arm in der effektiven Länge nur minimal verändert. Diese Hebelwirkung wird ausgenutzt, um mit einer vergleichsweise schwachen elektrischen Antriebsvorrichtung hohe Schweißkräfte zu erzielen. Insbesondere das Nachsetzverhalten kann mit dem servomotorischen Antriebssystem wesentlich besser geregelt werden, als mit den bisher auf dem Markt verfügbaren Antriebssystemen.

Weitere vorteilhafte Ausgestaltungen sind Gegenstand von Unteransprüchen.

In der Zeichnung ist ein Ausführungsbeispiel der Erfindung dargestellt, das im folgenden näher beschrieben wird. Es zeigen in schematischer Darstellungsweise:
- **Fig. 1**: eine Seitenansicht einer erfindungsgemäßen Roboterschweißzange,
- **Fig. 2**: ein Kräftedreieck der bei der Roboterschweißzange von **Fig.** 1 auftretenden Kräfte,
- **Fig. 3**: eine alternative Ausführung einer Roboterschweißzange und
- **Fig. 4**: eine erfindungsgemäße stationäre Widerstandsschweißmaschine mit zwei Armen.

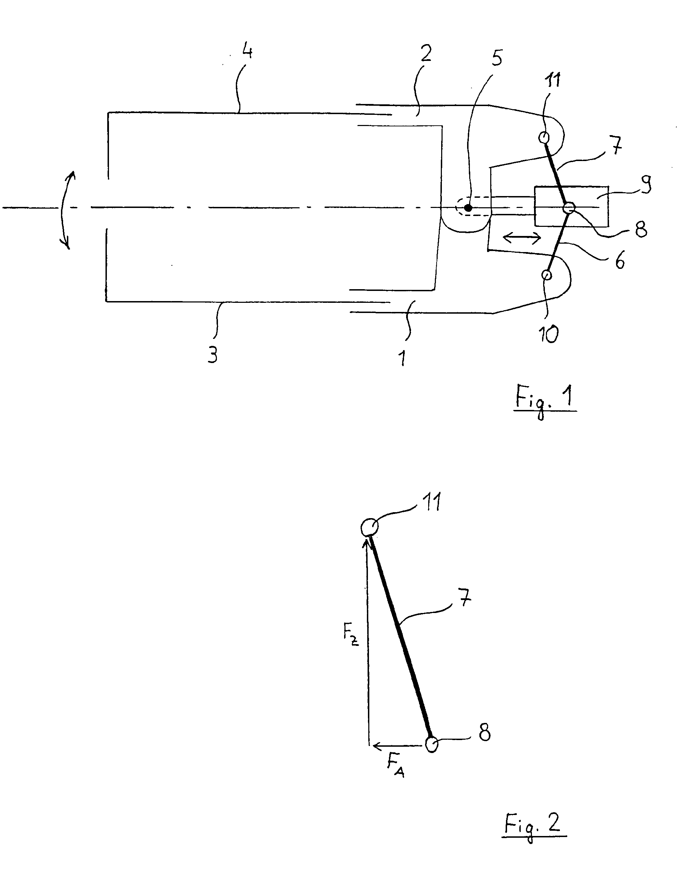

Die in **Fig.** 1 gezeigte erfindungsgemäße Roboterschweißzange besteht aus zwei Zangenarmaturen 1 und 2 mit jeweils einer Schweißelektrode 3 und 4, die relativ zueinander um ein gemeinsames Zangengelenk 5 eine Schwenkbewegung durchführen können. Die beiden Zangenarmaturen 1 und 2 erstrecken sich über das gemeinsame Zangengelenk 5 hinaus nach hinten. An diesen beiden freien, hinteren Enden der Zangenarmaturen ist jeweils ein erstes Ende eines Hebels 6 bzw. 7 angelenkt. Die beiden anderen Enden der Hebel 6 und 7 sind miteinander über ein Gelenk 8 verbunden. Ein elektrisches Motor-/Spindelsystem 9, das sich linear verlängern kann, ist zwischen dem Zangengelenk 5 und dem Gelenk 8 angeordnet.

Wenn sich nun das Motor-/Spindelsystem 9 verkürzt, wandert das Gelenk 8 näher zum Zangengelenk 5 hin. Dadurch werden die beiden Gelenke 10 und 11 der beiden Hebel 6 und 7 an den Zangenarmaturen 1 und 2 auseinander gedrückt. Die Schweißelektroden 3 und 4 an den anderen Enden der Zangenarmaturen 1 und 2 werden so automatisch zusammengedrückt. Da sich zum Aufbringen der Schweißkraft das Motor-/Spindelsystem 9 zusammenzieht, entstehen beim Einsatz einer elektrisch angetriebenen Rollspindel keine Probleme mit dem Führungsverhältnis in dem Motor-/Spindelsystem 9. Eine solche Roboterschweißzange kann selbst bei Ausladungen über 1000 mm Schweißkräfte von über 5kN erzeugen.

Die tatsächliche Schweißkraft an den beiden Enden der Schweißelektroden 3 und 4 ergibt sich aus dem von den Hebeln 6 und 7 auf die Schweißarmaturen 1 und 2 übertragenen Kraftanteil in senkrechter Richtung. Das Verhältnis zwischen dieser senkrechten Zangenkraft F_{Z} der vom Hebel 6 bzw. 7 übertragenen Kraft und der Kraft F_{A} des Motor-/Spindelsystems 9 ist in dem Kraftdreieck in **Fig.** 2 dargestellt. Der dritte Schenkel wird dabei durch den Hebel 6 bzw. 7 gebildet. In Abhängigkeit der Winkelstellung des Hebels 6 bzw. 7 ergibt sich ein mehr oder weniger großes Hebelverhältnis. Dabei ist zu beachten, dass je mehr sich die beiden Hebel 6 und 7 ihrer senkrechten Position annähern, sich eine um so größere Zangenkraft F_{z} ergibt, sich die beiden Schweißelektroden 3 und 4 bei konstanter Antriebsgeschwindigkeit dabei aber auch immer langsamer aufeinander zu bewegen. Die ideale Winkelstellung der Hebel 6 und 7 muss also ein Kompromiss zwischen der benötigten Zangenkraft F_{Z} und einer akzeptablen Arbeitsgeschwindigkeit sein. Maßgeblich für die tatsächliche Schweißkraft ist auch die Ausladung der Roboterschweißzange, also der Abstand zwischen den Enden der Schweißelektroden 3 und 4 zum Zangengelenk 5, im Verhältnis zur Länge der Erstreckung der Zangenarmaturen 1 und 2 zwischen Zangengelenk 5 und den Gelenken 10 und 11 mit den Hebeln 6 und 7.

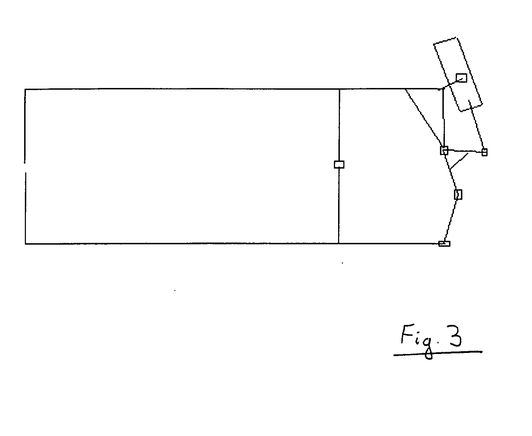

**Fig.** 3 zeigt eine alternative Ausführung einer Roboterschweißzange. Die Anordnung des Kniehebels ist hier im Vergleich zur **Fig**. 1 anders.

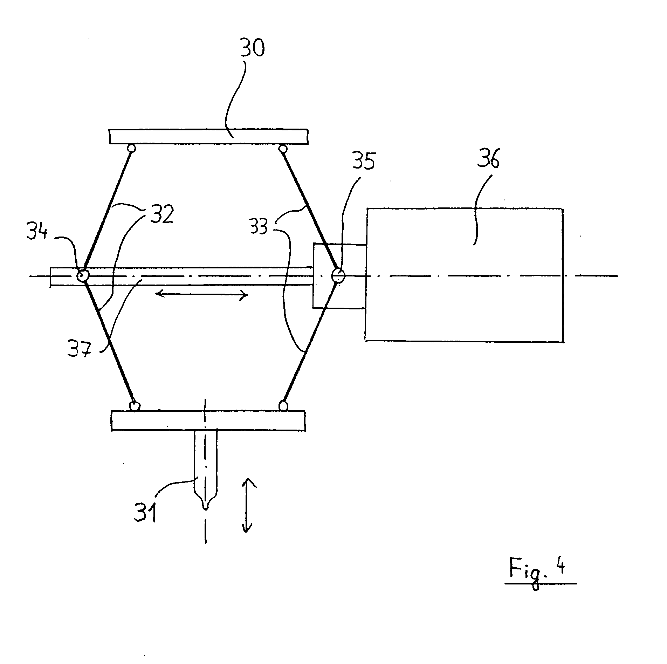

In **Fig.** 4 ist eine stationäre Widerstandsschweißmaschine 30 dargestellt. Diese besteht aus einer beweglichen Schweißelektrode 31, die über zwei Arme 32 und 33 an der Maschine angelenkt ist. Beide Arme 32 und 33 weisen in der gleichen Höhe je ein Gelenk 34 und 35 auf. Das rechte Gelenk 35 ist mit einem Gehäuse eines Elektromotors 36 verbunden. Der Elektromotor 36 treibt über eine Spindelmutter eine Spindel 37 an, deren Spitze mit dem linken Gelenk 34 verbunden ist.

Wenn nun der Elektromotor 36 läuft, verlagert sich die Spindel 37 nach rechts. Dadurch werden die beiden Gelenke 34 und 35 zueinander hergezogen. Durch die Hebelwirkung der beiden Arme 32 und 33 wird so die Schweißelektrode 31 nach unten gedrückt. So kann sogar mit einer Antriebskraft von 215 kN Schweißkräfte von bis zu 150 kN erzeugt werden.

Aufgrund der hohen Steifigkeit der Widerstandsschweißmaschinen ist das Nachsetzverhalten des Antriebssystems ein entscheidendes Kriterium für die Qualität der Schweißung und mit den bisher verfügbaren Systemen noch nicht zufriedenstellend gelöst.

Die maximal erzielbaren Schweißkräfte werden bei weitem nicht benötigt. Deshalb lässt sich bei stationären Widerstandsschweißmaschinen mit derart hohen Reserven im Antriebssystem das Nachsetzverhalten erheblich verbessern bzw. weggesteuert programmieren. Der technische Mehraufwand ist dabei vergleichsweise klein. Dies ist insbesondere bei Buckelschweißmaschinen ein großer Vorteil.

Dieses Prinzip eines Motor-/Spindelsystems 36, 37 mit zwei Armen 32 und 33 mit Gelenken 34 und 35 lässt sich auch auf stationäre Maschinen und Zangen zum mechanischen Fügen übertragen. Dabei werden Kräfte bis über 100 kN benötigt.

## Patentansprüche

1. Antriebssystem zum Vervierfachen bis zum Verzehnfachen der Antriebskärfte eines Motor-/Spindelsystems zum Einsatz in Maschinen, die die hohen Kräfte nur im Endbereich der Bewegung benötigen, **dadurch gekennzeichnet, dass** das Antriebssystem aus einem servogesteuerten Motor-/Spindelsystem und einem nachgeschalteten Kniehebel besteht.

2. Roboterschweißzange zum Punktschweißen, bestehend aus zwei Zangenarmaturen mit jeweils einer Schweißelektrode, die relativ zueinander im Sinne einer Abstandsveränderung zwischen den Enden der Schweißelektroden in ihrer Lage mittels eines elektrischen, linearen Antriebssystems veränderlich sind, **dadurch gekennzeichnet, dass** das Antriebssystem aus einem Motor-/Spindelsystem und einem nachgeschalteten Kniehebel besteht.

3. Roboterschweißzange nach Anspruch 1, **dadurch gekennzeichnet, dass** die Zangenarmaturen (**1, 2**) sich über ein gemeinsames Zangengelenk (**5**) hinaus verlängern, wobei an den freien Enden jeweils ein Hebel (**6, 7**) gelenkig angreift, dessen beiden anderen Enden über ein Gelenk (**8**) miteinander verbunden sind, wobei der Abstand des Gelenks (**8**) zum Zangengelenk (**5**) durch das Motor/Spindelsystem (**9**) veränderbar ist.

4. Roboterschweißzange nach einem der vorhergehenden Ansprüche, **dadurch gekennzeichnet, dass** die Schweißzange eine Schweißkraft von mindestens 20kN erreicht.

5. Roboterschweißzange nach Anspruch 3, **dadurch gekennzeichnet, dass** die Schweißzange eine Schweißkraft von mindestens 30kN erreicht.

6. Stationäre Widerstandsschweißmaschine, bei der zumindest eine Schweißelektrode in ihrer Lage entlang einer mechanisch vorgegebenen Bahn mittels eines elektrischen, linearen Antriebssystems veränderlich ist, **dadurch gekennzeichnet, dass** die Schweißelektrode (**31**) über einen Arm (**32, 33**) mit der Widerstandsschweißmaschine (**30**) verbunden ist, wobei der Arm (**32, 33**) im mittleren Bereich durch ein Gelenk (**34, 35**) in zwei Hebel unterteilt ist, und das Motor-/Spindelsystem (**36**) an dem Gelenk (**34, 35**) angreift.

7. Stationäre Widerstandsschweißmaschine nach Anspruch 5, **dadurch gekennzeichnet, dass** die Schweißelektrode (**31**) über zwei dieser Arme (**32, 33**) mit der Widerstandsschweißmaschine (**30**) verbunden ist.

8. Stationäre Widerstandsschweißmaschine nach Anspruch 6, **dadurch gekennzeichnet, dass** die Gelenke (**34, 35**) der beiden Arme (**32, 33**) mit einem gemeinsamen Motor-/Spindelsystem (**36**) verbunden sind.
